# EUROPEAN PATENT APPLICATION

(11) **EP 0 827 088 A2**
(43) Date of publication of application: **04.03.1998**
(21) Application number: 97304398.7
(22) Date of filing: 23.06.1997
(51) Int. Cl.: G06F 17/27, G06F 17/30

(54) **Finding and modifying strings of a regular language in a text**

(30) Priority: 22.06.1996 GB 9613141
(71) Applicant: XEROX CORPORATION, Rochester New York 14644 (US)
(72) Inventor: Karttunen, Lauri J., 38240 Meylan (FR)
(74) Representative: Reynolds, Julian David

(57) **Abstract**

A method carried out in a data processing system, comprising the steps of: (a) reading an input string in a first language, (b) determining the position in the input string of at least one predetermined substring, (c) modifying said substring, and (d) outputting said string including said modified substring. The substring may be selected in a left to right or right to left direction, and the longest or shortest match may be accepted. The substring may be output with markers inserted before or after it (e.g. for use in text filtering or information retrieval applications). Alternatively, the substring may be replaced by a string, symbol of a second language, or by the empty string.

## Description

The present invention relates to text processing, and more particularly to techniques for finding and modifying strings of a regular language in a text.

In the field of text processing, there are many applications in which an efficient technique for replacing strings which appear in one language (UPPER) with one or more elements of another (LOWER) language is needed. For example, it may be desirable to reduce the amount of storage space required for the text, to insert tags so that all the text appearing between the tags appears or does not appear, or to mark instances of a regular language without changing the text in any other way. [The term "regular language" is defined, for example, in "Introduction to Automata Theory, Languages, and Computation" by John E. Hopcroft and Jeffrey D. Ullman. Addison-Wesley. Menlo Park, CA. 1979.]

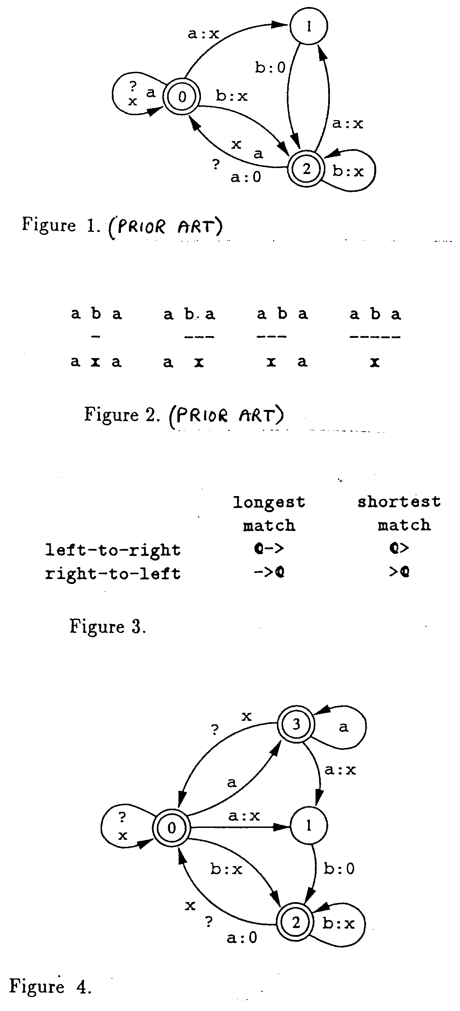

A problem associated with transducers compiled from known simple replace expressions UPPER -> LOWER (Karttunen 1995, Kempe and Karttunen 1996; as used herein, 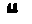 Karttunen 1995, Kempe and Karttunen 1996 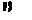 , etc. are indicators to references listed in Karttunen L., 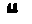 Directed replacement 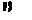 , In *Proc. Annual Meeting of the Association for Computational Linguistics*, ACL-96, California (hereafter 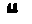 Ref. 1 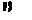 )) is that they are generally nondeterministic in the sense that they may yield multiple results even if the lower language consists of a single string. This known replacement is described in Ref. 1 with reference to Figs 1 and 2 thereof (reproduced herein). (The regular expression formalism and other notational conventions used herein are explained in Ref. 1 (Appendix).)

This nondeterminism arises in two ways. First of all, a replacement can start at any point. Thus different results are obtained depending on whether the start point is at the beginning of the string or in the middle. Secondly, there may be alternative replacements with the same starting point. Figure 2 shows (underlined) four alternate factorisations of the input string.

The present invention seeks to overcome the above and other drawbacks of known simple replacement operators.

The present invention provides a method carried out in a data processing system, comprising the steps of: (a) reading an input string in a first language, (b) determining the position in the input string of at least one predetermined substring, (c) modifying said substring, and (d) outputting said string including said modified substring.

Preferably, step (b) includes the steps of (b1) determining the position of a predetermined first indicator, said substring including said first indicator and a predetermined second indicator at the start and end thereof, respectively, and wherein said predetermined replacement element comprises an empty string.

Preferably, step (b) includes the steps of (b2) determining the position of a predetermined first indicator, said substring including said first indicator at the end thereof, and wherein said predetermined replacement element comprises said first indicator.

Preferably, step (b) includes the steps of (b3) determining the position of a predetermined second indicator, said substring including said second indicator at the start thereof, and wherein said predetermined replacement element comprises said second indicator.

Preferably, said predetermined first indicator and/or said predetermined second indicator comprises a predetermined regular pattern.

Alternatively, said predetermined first indicator comprises a SGML start tag (〈A〉) and said predetermined second indicator comprises a SGML end tag (〈/A〉).

The invention further provides a programmable text processing apparatus when suitably programmed for carrying out any of the above-mentioned methods, or according to any of the particular embodiments described herein, the apparatus including a processor, memory, and input/output circuitry.

The methods according to the invention have the property that they unambiguously parse the input string into a sequence of substrings that are either copied to the output unchanged or replaced by some other strings.

The invention introduces to the finite-state calculus a family of directed replace operators (defined by UPPER @-> LOWER), which yield a unique result whenever the lower language consists of a single string. Preferably, it transduces the input string from left to right, making only the longest possible replacement at each point.

The invention preferably employs finite-state transducers in performing the directed replacement. Although the same results could often be achieved by using lex and yacc, sed, awk, perl, and other Unix utilities, there is an advantage in using finite-state transducers for these tasks because they can then be smoothly integrated with other finite-state processes, such as morphological analysis by lexical transducers and rule-based part-of-speech disambiguation.

In addition, a new type of replacement expression, UPPER @-> PREFIX ... SUFFIX, is introduced to insert text around strings matching the given pattern. The symbol ... denotes the matching part of the input which itself remains unchanged. PREFIX and SUFFIX are regular expressions describing the insertions.

An advantage is that expressions of the type UPPER ->PREFIX ... SUFFIX may be used to compose a deterministic parser for a "local grammar" in the sense of Gross (1989). The invention also provides beneficial effects when applied to the techniques of tokenisation and filtering of text streams.

Embodiments of the invention will now be described, by way of example, with reference to the accompanying drawings, in which:
Figure 1 illustrates a known replacement transducer representing a b | b | b a | a b a ->x;
Figure 2 shows (underlined) the four alternate factorisations of the input string of Fig. 1;
Figure 3 illustrates four alternative forms of directed replacement operator according to the present invention;
Figure 4 is a representation of the transducer for a b | b | b a | a b a @-> x (left-to-right, longest-match in Fig. 3);
Figure 5 schematically illustrates the left-to-right, longest-match technique of Fig. 4;
Figure 6 shows the component relations and how they are composed with the input in the directed replacement technique according to the invention;
Figure 7 illustrates caret insertion in a substring the initial match step of Fig. 6;
Figure 8 shows allowable and non-allowable bracketing of substrings in implementing the left-to-right constraint of Fig. 6;
Figure 9 shows allowable and non-allowable bracketing of substrings in implementing the longest match constraint of Fig. 6;
Figure 10 presents versions of UPPER that freely allow non-final diacritics;
Figure 11 illustrates the relation UPPER @-> LOWER for the directed replacement technique according to the invention;
Figure 12 shows a simple transducer for a+b @-> x;
Figure 13 illustrates an insertion expression in the definition of UPPER @-> PREFIX ... SUFFIX in one embodiment of the invention;
Figure 14 depicts the application of (d)a* n+ @-> %[ ... %], to insert brackets around maximal instances of the noun phrase pattern, to a substring "dannvaan";
Figure 15 shows the transducer resulting from (d)a* n+ @-> %[ ... %] and applied to 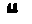 dannvaan", as in Fig. 14;
Figure 16 illustrates the application of the present invention in one embodiment ― in the construction of a simple tokeniser for the English language;
Figure 17 shows a negative filter used in text filtering in one application of the present invention;
Figure 18 shows a positive filter used in text filtering in one application of the present invention;
Figure 19 shows the effect of the positive filter of Fig. 18;
Figure 20 illustrates the composition of an NP and a VP spotter in the application of the present invention to marking of text;
Figure 21 shows the effect of applying the composite transducer of Fig. 20 to the string 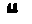 dannvaan 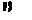 ;
Figure 22 illustrates a further embodiment of the present invention, effecting directed, parallel replacement;
Fig. 23 illustrates the construction of a marking transducer for any arbitrary regular language L; and
Figure 24 illustrates the procedural steps in applying the date-marking transducer built according to Fig. 23.

As will be apparent to persons skilled in the art, the present invention may be implemented by means of a suitably programmed conventional computer, such as, for example, a minicomputer running UNIX®, or a PC running DOS/Windows®, which are well known in the art.

It has been found that the above-mentioned problems may be solved by constraining the directionality and the length of replacement. Directionality means that the replacement sites in the input string are selected starting from the left or from the right, not allowing any overlaps. The length constraint forces the longest or the shortest replacement to be chosen whenever there are multiple candidate strings starting at a given location. The term used herein for this is 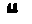 directed replacement 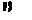 (see section A below).

With these two kinds of constraints four types of directed replacement may be defined, illustrated in Figure 3. For conciseness, only the left-to-right, longest-match version is discussed herein. It will be apparent to persons skilled in the art that the other cases are similar.

The effect of the directionality and length constraints is that some possible replacements are ignored. For example, a b | b | b a | a b a @-> x maps 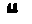 aba 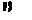 uniquely into 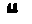 x", see Figure 4.

Because it is necessary to start from the left and have to choose the longest match, 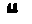 aba 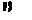 must be replaced, ignoring the possible replacements for 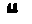 b", 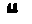 ba", and 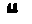 ab". The @-> operator allows only the last factorisation of 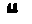 aba" in Figure 2.

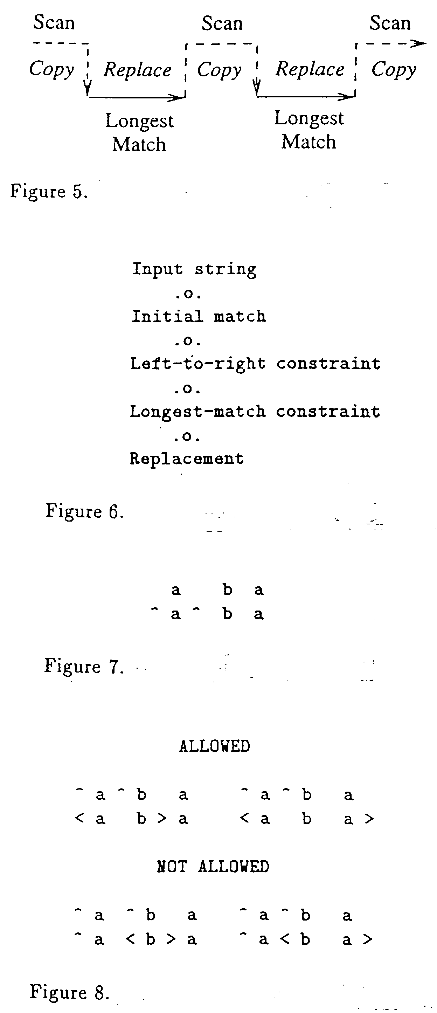

Figure 5 schematically illustrates the left-to-right, longest-match technique of Fig. 4: this can be thought of as a procedure that rewrites an input string sequentially from left to right. It copies the input until it finds an instance of UPPER. At that point it selects the longest matching substring, which is rewritten as LOWER, and proceeds from the end of that substring without considering any other alternatives.

A solution to encoding the operation as a finite-state transducer for arbitrary regular patterns is required. Although a unique substring is selected for replacement at each point, in general the transduction is not unambiguous because LOWER is not required to be a single string; it can be any regular language.

The crucial finding is that the two constraints, left-to-right and longest-match, force a unique factorisation on the input string, thus making the transduction unambiguous if the LOWER language consists of a single string. In effect, the input string is unambiguously parsed with respect to the UPPER language. This property turns out to be important for a number of applications. Thus it is useful to provide a replacement operator that implements these constraints (left-to-right, longest-match) directly.

### A. Directed Replacement

The term directed replacement (as used herein) is defined by means of a composition of regular relations. As in Kaplan and Kay (1994), Karttunen (1995), and other previous works on related topics, the intermediate levels of the composition introduce auxiliary symbols to express and enforce constraints on the replacement relation.

Figure 6 shows the component relations and how they are composed with the input in the direct replacement technique according to the invention. If the four relations on the bottom of Figure 6 are composed in advance, as in the presently-implemented compiler, the application of the replacement to an input string takes place in one step without any intervening levels and with no auxiliary symbols. However, it helps to understand the logic to see where the auxiliary marks would be in the hypothetical intermediate results.

Let us consider the case of a b | b | b a | a b a @->x applying to the string 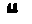 aba" and see in detail how the mapping implemented by the transducer in Figure 4 is composed from the four component relations. In this disclosure are used three auxiliary symbols, caret (^), left bracket (〈) and right bracket (〉), assuming here that they do not occur in any input.

Figure 7 illustrates caret insertion in a substring the initial match step of Fig. 6: this composes the input string with a transducer that inserts a caret in the beginning of every substring that belongs to the upper language (i.e. matches 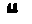 ab", 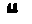 b", 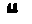 ba", or 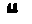 aba"). Note that only one ^ is inserted even if there are several candidate strings starting at the same location.

Figure 8 shows allowable and non-allowable bracketing of substrings in implementing the left-to-right constraint of Fig. 6. In the left-to-right step, all the substrings starting at a location marked by a caret that are instances of the upper language are enclose in angle brackets. The initial caret is replaced by a 〈, and a closing 〉 is inserted to mark the end of the match. It is permitted for carets to appear freely while matching. No carets are permitted outside the matched substrings and the ignored internal carets are eliminated. In this case, there are four possible outcomes, shown in Figure 8, but only two of them are allowed under the constraint that there can be no carets outside the brackets.

In effect, no starting location for a replacement can be skipped over except in the context of another replacement starting further left in the input string. (Roche and Schabes (1995) introduce a similar technique for imposing the left-to-right order on the transduction.) Note that the four alternatives in Figure 8 represent the four factorisations in Figure 2.

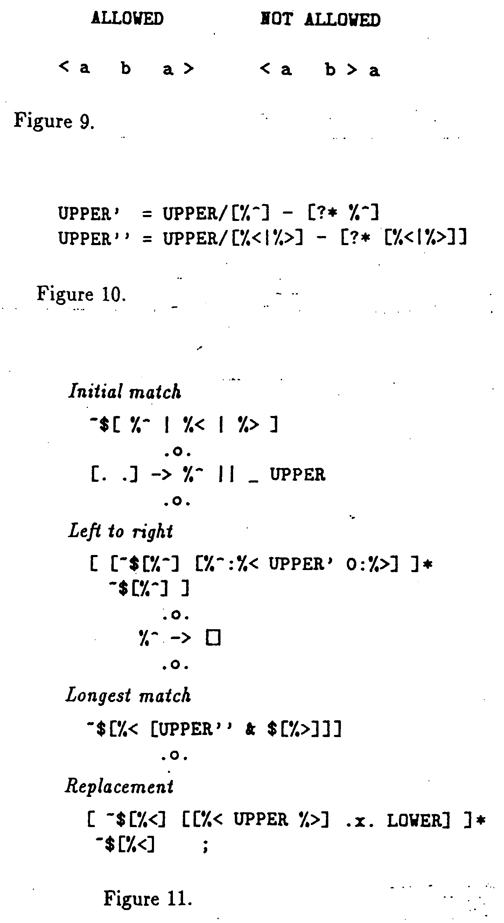

Figure 9 shows allowable and non-allowable bracketing of substrings in implementing the longest match constraint of Fig. 6. The longest-match constraint is the identity relation on a certain set of strings. It forbids any replacement that starts at the same location as another, longer replacement. In the case at hand, it means that the internal 〉 is disallowed in the context 〈 a b 〉 a. Because 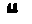 aba" is in the upper language, there is a longer, and therefore preferred, 〈 a b a 〉 alternative at the same starting location.

In the final replacement step, the bracketed regions of the input string, in the case at hand, just 〈 a b a〉, are replaced by the strings of the lower language, yielding 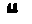 x" as the result for our example.

Note that longest match constraint ignores any internal brackets. For example, the bracketing 〈 a 〉 〈 a 〉 is not allowed if the upper language contains 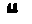 aa" as well as 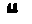 a 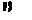 . Similarly, the left-to-right constraint (Fig. 8) ignores any internal carets.

As the first step towards a formal definition of UPPER @-> LOWER it is useful to make the notion of 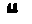 ignoring internal brackets" more precise. Figure 10 contains the auxiliary definitions. For the details of the formalism (briefly explained above), please consult Karttunen (1995), Kempe and Karttunen (1996). UPPER' is the same language as UPPER except that carets may appear freely in all nonfinal positions. Similarly, UPPER 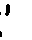 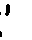 accepts any nonfinal brackets.

Figure 11 illustrates the relation UPPER @-> LOWER for the direct replacement technique according to the invention. The precise definition of the relation is given, and it will be appreciated that it is a composition of many auxiliary relations. The major components are labelled in accordance with the outline in Figure 6.

The logic of @-> replacement could be encoded in many other ways, for example, by using the three pairs of auxiliary brackets, 〈i, 〉i, 〈c, 〉c, and 〈a, 〉a, introduced in Kaplan and Kay (1994). However, the relation of Fig. 11 takes a more minimalist approach. One reason is that it is considered preferable to think of the simple unconditional (uncontexted) replacement as the basic case, as in Karttunen (1995). Without the additional complexities introduced by contexts, the directionality and length-of-match constraints can be encoded with fewer diacritics. (It is believed that the conditional case can also be handled in a simpler way than in Kaplan and Kay (1994).) The number of auxiliary markers is an important consideration for some of the applications discussed below.

In a phonological or morphological rewrite rule, the centre part of the rule is typically very small: a replacement or modification of one segment. On the other hand, in certain text processing applications, the upper language may involve a large network representing, for example, a lexicon of multiword tokens. Practical experience shows that the presence of many auxiliary diacritics makes it difficult or impossible to compute the left-to-right and longest-match constraints in such cases. The size of intermediate states of the computation becomes a critical issue, while it is irrelevant for simple phonological rules. This issue will be discussed further, in the context of tokenising transducers, in Section C below.

The transducers derived from the definition in Figure 11 have the property that they unambiguously parse the input string into a sequence of substrings that are either copied to the output unchanged or replaced by some other strings. However they do not fall neatly into any standard class of transducers discussed in the literature (Eilenberg 1974, Schutzenberger 1977, Berstel 1979). If the LOWER language consists of a single string, then the relation encoded by the transducer is in Berstel's terms a rational function, and the network is an unambiguous transducer, even though it may contain states with outgoing transitions to two or more destinations for the same input symbol. An unambiguous transducer may also be sequentiable, in which case it can be turned into an equivalent sequential transducer (Mohri 1994), which can in turn be minimised. A transducer is sequential just in case there are no states with more than one transition for the same input symbol. Roche and Schabes (1995)call such transducers deterministic.

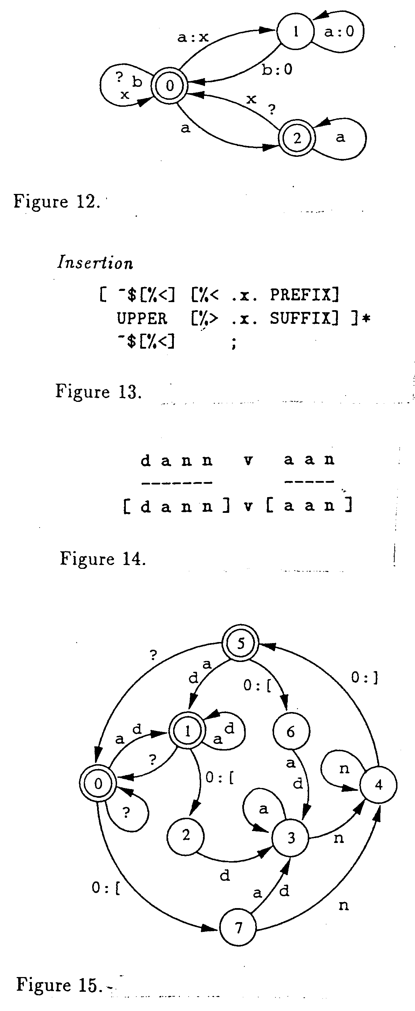

The replacement transducers employed in accordance with the invention in general are not unambiguous because LOWER is allowed to be any regular language. It may well be that, in most applications of this technique, the lower language is in fact a singleton, or at least some finite set, but it is not so by definition. Even if the replacement transducer is unambiguous, it may well be unsequentiable if UPPER is an infinite language. For example, the simple transducer for a+ b @-> x in Figure 12 cannot be sequentialized. It has to replace any string of "a"s by "x" or copy it to the output unchanged depending on whether the string eventually terminates in 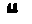 b". It is obviously impossible for any finite-state device to accumulate an unbounded amount of delayed output. On the other hand, the transducer in Figure 4 is sequentiable because the choice between a and a:x just depends on the next input symbol.

Because none of the classical terms fits exactly, a novel term, directed transduction, has been chosen to describe a relation induced by the definition in Figure 11. It is meant to suggest that the mapping from the input into the output strings is guided by the directionality and length-of-match constraints. Depending on the characteristics of the UPPER and LOWER languages, the resulting transducers may be unambiguous and even sequential, but that is not guaranteed in the general case.

### B. Insertion

This section introduces a novel type of replace expression for constructing transducers that unambiguously recognise and mark instances of a regular language without actually replacing them.

The effect of the left-to-right and longest-match constraint is to factor any input string uniquely with respect to the upper language of the replace expression, to parse it into a sequence of substrings that either belong or do not belong to the language. Instead of replacing the instances of the upper language in the input by other strings, we can also take advantage of the unique factorisation in other ways. For example, we may insert a string before and after each substring that is an instance of the language in question simply to mark it as such.

To implement this idea, the special symbol ... is introduced on the right-hand side of the replacement expression to mark the place around which the insertions are to be made. Thus we allow replacement expressions of the form UPPER @-> PREFIX... SUFFIX.

Figure 13 illustrates an insertion expression in the definition of UPPER @-> PREFIX ... SUFFIX in one embodiment of the invention. The corresponding transducer locates the instances of UPPER in the input string under the left-to-right, longest-match regimen just described. But instead of replacing the matched strings, the transducer just copies them, inserting the specified prefix and suffix. For the sake of generality, we allow PREFIX and SUFFIX to denote any regular language.

In this embodiment of the invention, the definition of UPPER @-> PREFIX ... SUFFIX is just as in Figure 11 except that the Replacement expression is replaced by the Insertion formula in Fig. 13.

With the ... expressions transducers can be constructed that mark maximal instances of a regular language. For example, assume that noun phrases consist of an optional determiner, (d), any number of adjectives, a*, and one or more nouns, n+. The expression (d)a* n+ @-> %[ ... %] compiles into a transducer that inserts brackets around maximal instances of the noun phrase pattern. For example, it maps "dannvaan" into "[dann]v[aan]", as shown in Figure 14.

Figure 15 shows the transducer resulting from (d) a* n+ @-> %[ ... %] and applied to 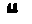 dannvaan", as in Fig. 14. Although the input string "dannvaan" contains many other instances of the noun phrase pattern, "n", "an", "nn", etc., the left-to-right and longest-match constraints pick out just the two maximal ones. Note that ? here matches symbols, such as v, that are not included in the alphabet of the network.

### C. Applications

The directed replacement operators have many useful applications, some of which are described below.

### C.1 Tokenisation

A tokeniser is a device that segments an input string into a sequence of tokens. The insertion of end-of-token marks can be accomplished by a finite-state transducer that is compiled from tokenisation rules. The tokenisation rules may be of several types. For example, [WHITE_SPACE+ @-> SPACE] is a normalising transducer that reduces any sequence of tabs, spaces, and new lines to a single space. [LETTER+ @->END_OF_TOKEN] inserts a special mark, e.g. a new line, at the end of a letter sequence.

Although a space generally counts as a token boundary, it can also be part of a multiword token, as in expressions like "at least", "head over heels", "in spite of 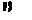 , etc. Thus the rule that introduces the END_OF_TOKEN symbol needs to combine the LETTER+ pattern with a list of multiword tokens which may include spaces, periods and other delimiters.

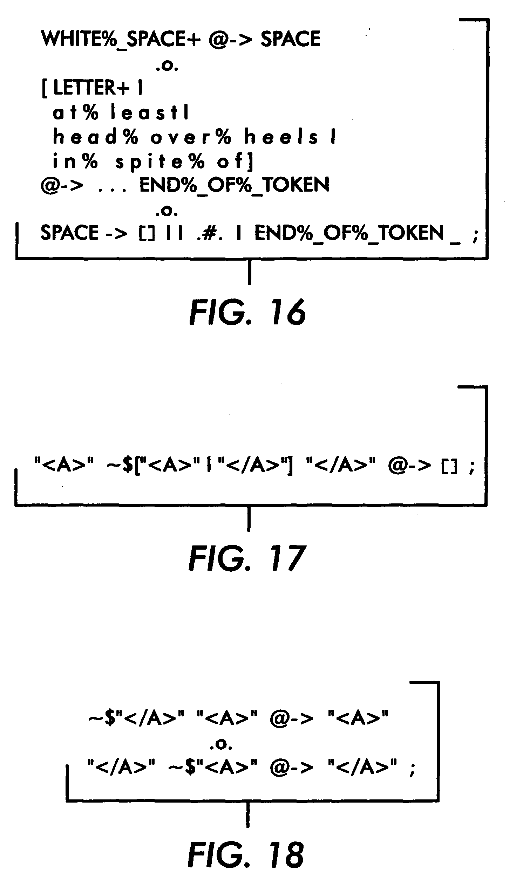

Figure 16 illustrates the application of the present invention in one embodiment in the construction of a simple tokeniser for the English language. The tokeniser in Figure 16 is composed of three transducers. The first reduces strings of whitespace characters to a single space. The second transducer inserts an END_OF_TOKEN mark after simple words and the listed multiword expressions. The third removes the spaces that are not part of some multiword token. As mentioned above, the percent sign here means that the following blank is to be taken literally, that is, parsed as a symbol.

Without the left-to-right, longest-match constraints, the tokenising transducer would not produce deterministic output. Note that it must introduce an END_OF_TOKEN mark after a sequence of letters just in case the word is not part of some longer multiword token. This problem is complicated by the fact that the list of multiword tokens may contain overlapping expressions. A tokeniser for French, for example, needs to recognise 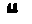 de plus" (moreover), "en plus" (more), 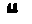 en plus de" (in addition to), and 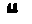 de plus en plus" (more and more) as single tokens. Thus there is a token boundary after 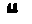 de plus" in de plus on ne le fat plus (moreover one doesn't do it anymore) but not in on le fait de plus en plus (one does it more and more) where 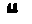 de plus en plus" is a single token.

If the list of multiword tokens contains hundreds of expressions, it may require a lot of time and space to compile the tokeniser even if the final result is not too large. The number of auxiliary symbols used to encode the constraints has a critical effect on the efficiency of that computation. We first observed this phenomenon in the course of building a tokeniser for the British National Corpus according to the specifications of the BNC Users Guide (Leech 1995), which lists around 300 multiword tokens and 260 foreign phrases. With the current definition of the directed replacement we have now been able to compute similar tokenisers for several other languages (French, Spanish, Italian, German).

It will be appreciated that the tokenisation techniques according to the invention may be employed using the techniques described in US-A-5,325,091, US-A-5,438,511 and US-A-5,523,946.

### C.2 Filtering

Some text processing applications involve a preliminary stage in which the input stream is divided into regions that are passed on to the calling process and regions that are ignored. For example, in processing an SGML-coded document, we may wish to delete all the material that appears or does not appear in a region bounded by certain SGML tags, say 〈A〉 and 〈/A〉.

Both types of filters can easily be constructed using an embodiment of the directed replace operator according to the invention. Figure 17 shows a negative filter used in text filtering in one application of the present invention. A negative filter deletes all the material between the two SGML codes, including the codes themselves, is expressed as in Figure 17.

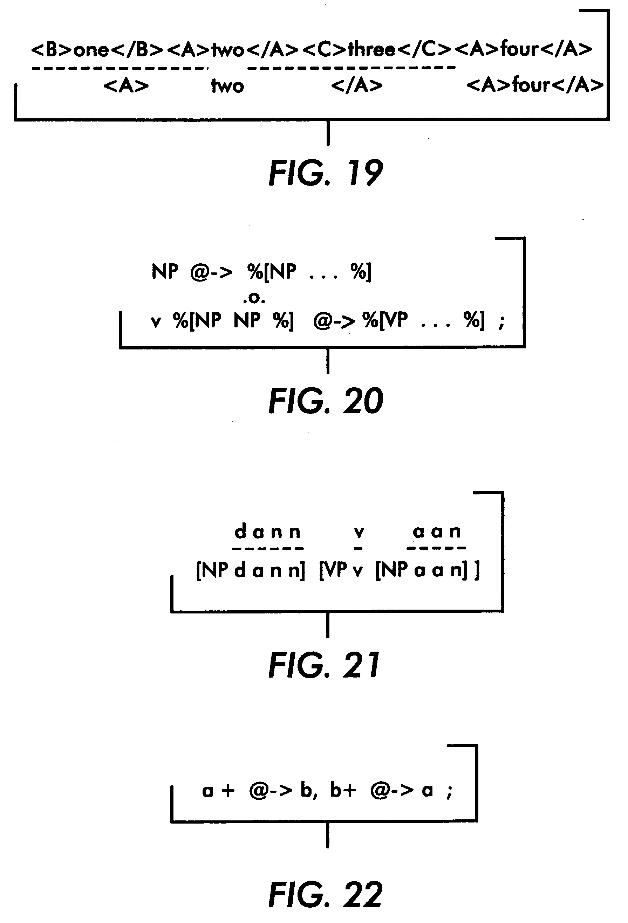

Figure 18 shows a positive filter used in text filtering in one application of the present invention. A positive filter excludes everything else (outside the two SGML codes). The positive filter is composed of two transducers. The first reduces to 〈A〉 any string that ends with it and does not contain the 〈/A〉 tag. The second transducer does a similar transduction on strings that begin with 〈/A〉. Figure 19 illustrates the effect of the positive filter.

The technique of filtering by finite-state transduction of course does not depend on SGML codes. It can be applied to texts where the interesting and uninteresting regions are defined by any kind of regular pattern.

### C.3 Marking

As was observed in section B above, by using the ... symbol on the lower side of the replacement expression, transducers can be constructed that mark instances of a regular language without changing the text in any other way. Such transducers have a wide range of applications. They can be used to locate all kinds of expressions that can be described by a regular pattern, such as proper names, dates, addresses, social security and phone numbers, and the like. Such a marking transducer can be viewed as a deterministic parser for a 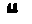 local grammar" in the sense of Gross (1989), Roche (1993), Silberztein (1993) and others.

By composing two or more marking transducers, a single transducer that builds nested syntactic structures, up to any desired depth can also be constructed.

To make the construction simpler, auxiliary symbols for the basic regular patterns can first be defined. For example, NP may be defined as [(d) a* n+]. With that abbreviatory convention, a composition of a simple NP and VP spotter can be defined as in Figure 20. Figure 21 shows the effect of applying this composite transducer to the string "dannvaan" (mentioned earlier in the embodiment described with reference to Fig. 14).

By means of this simple "bottom-up" technique, it is possible to compile finite-state transducers that approximate a context-free parser up to a chosen depth of embedding. Of course, the left-to-right, longest-match regimen implies that some possible analyses are ignored. To produce all possible parses,the ... notation may be introduced to the simple replace expressions in Karttunen (1995).

### D. Extensions

Figure 22 illustrates a a variant of the present invention, effecting directed, parallel replacement: this is described further in Ref. 1.

### E. Directed replacement - Examples

### D.1. Construction of a transducer for marking a date expression

This example describes in detail the construction of a transducer that marks date expressions, such as "Friday, June 14, 1996". (This marking is similar to the embodiment of Figs 14,15). For example, when applied to the text
"On Friday, June 14, 1996 I talked with Bill."
   the transducer outputs
"On [DATE Friday, June 14, 1996] I talked with Bill."
   where the "[DATE" marks the beginning and "]" end of a maximal date expression. It also marks shorter date expressions, such as
   "On June 14, 1996 I talked with Bill."
   "On Friday, June 14 I talked with Bill."
   "On June 14 I talked with Bill."
Here, date expressions are considered that have the format described below:
a day of the week (Monday, Tuesday, ..., Sunday)
day separator (, )
month (January, February, ..., December)
month separator ()
date (1, 2 , ..., 31)
date separator
year (1, 2, ..., 9999)

The day of the week part is considered as optional because "June 14, 1996" is also a valid date expression. Also, "June 14" by itself is accepted, as well as "Friday, June 14", and "June 14, 1996" ― treating the year as well as the weekday as optional.

In the interest of clarity, other date formats, such as, Fri, 14-June, 1996, 06/14/96, 14.6.1996, 96-06-14, etc., are ignored: these could easily be handled in addition to the single format chosen here as the example.

Note that expressions such as "Friday, June 14, 1996" are similar to the noun phrase example discussed in section B. ("dannvaan") and the tokeniser example in section C.1 ("de plus en plus") in that it includes substrings that themselves are valid expressions of the same type: "Friday", "Friday, June 14", "June, 14", "June 14, 1996" are all by themselves wellformed date expressions. But the marking transducer for dates obviously should pick out the maximal date expression in each context. That is, it must avoid outputs such as "On Friday, [DATE June 14], 1996 I talked with Bill." in which the marked phrase "June 14" is suboptimal because it does not include the day of the week and the year. Secondly, the transducer must not yield outputs such as "On [DATE Friday, [DATE June 14], 1996] I talked with Bill." which contain multiple markings.

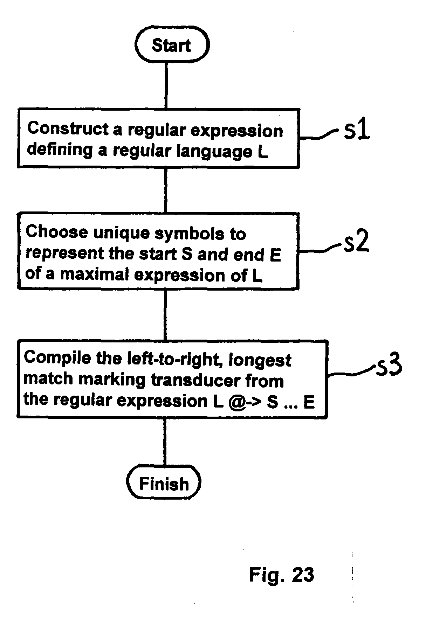

Fig. 23 illustrates the construction of a marking transducer for any arbitrary regular language L. In step s1, there is defined the language UPPER of dates by means of a regular expression. In this case, using the date format selected, this can be defined by the regular expression
UPPER = ( WeekDay Comma) Month" " Date (Comma Year)
where the components of this regular expression are themselves defined as follows 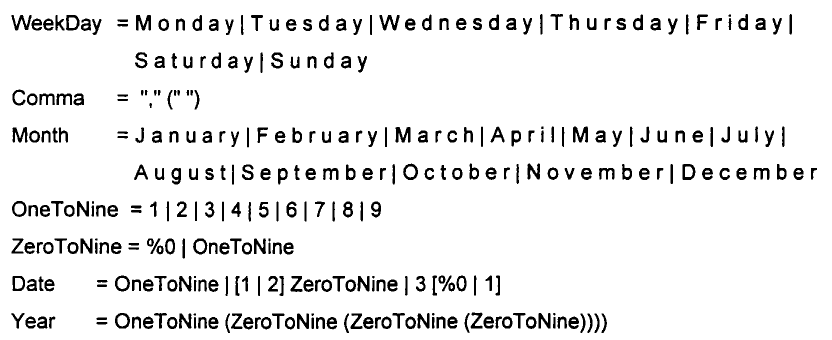 After determinisation and minimisation, the resulting simple finite-state network contains 72 states and 168 arcs. It includes more than a hundred million date expressions.

In step s2, the begin and end markers, PREFIX and SUFFIX, to indicate the beginning and the end of a maximal expression of UPPER, are chosen:
PREFIX = "[DT"
SUFFIX = "]"

Step s3 comprises compiling the regular expression
UPPER @-> PREFIX ... SUFFIX
into a finite-state transducer using the formulas in Figures 11 and 13. The transducer is compiled by a stepwise composition of four components
InitialMatch .o. LeftToRight .o. LongestMatch .o. Insert
which are defined as follows
InitialMatch = ∼$[AUX] .o. [] -> %^ .o. UPPER' => %^_
LeftToRight = [ [∼$[%^] [%^:%〈 UPPER' 0:%〉] ]* ∼$[%^] ] .o. %^-> []
LongestMatch = ∼$[%〈 [UPPER'' & $[%〉]]]
Insert = %〈 -〉 PREF, %> -> SUFF
using the following auxiliary definitions
AUX1 = %^
AUX2 = %〈 | %〉
AUX = AUX1| AUX2
UPPER' = UPPER/AUX1 - [?* AUX1] - [AUX1 ?*]
UPPER'' = UPPER/AUX2 - [?* AUX2] - [AUX2 ?*]

The result of the compilation is a transducer that consists of 141 states and 3069 arcs. Because of its relatively small size, the transducer can easily be incorporated in text processing applications. Because of the left-to-right, longest match constraints that are incorporated in the definition of the @-> operator, the transducer unambiguously inserts marks around maximal occurrences of strings that belong to the UPPER language.

### D.2. The application of the date marking transducer

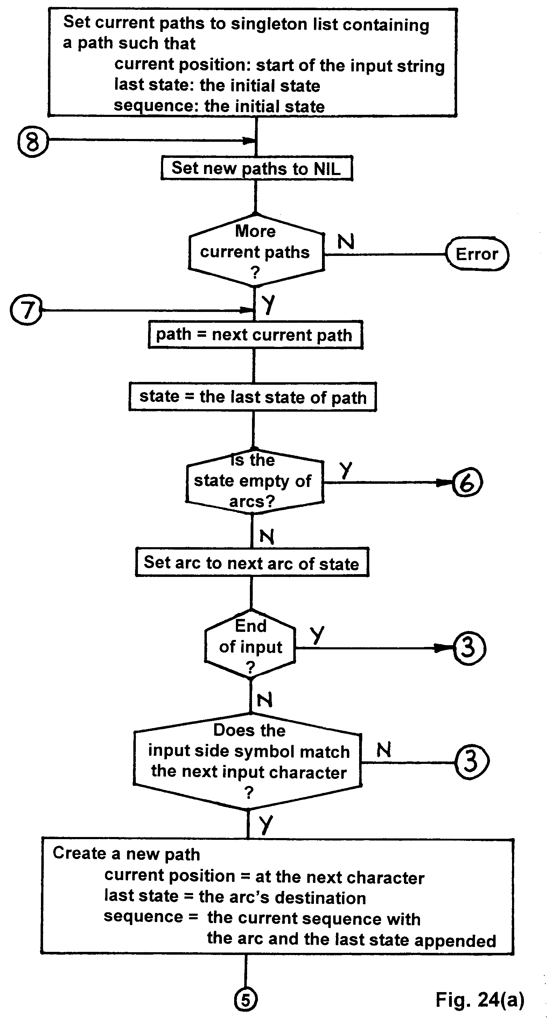

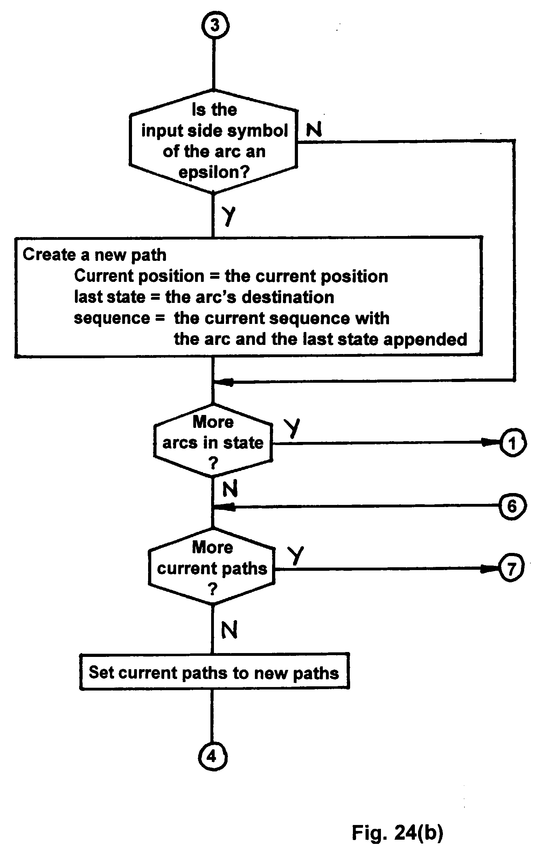

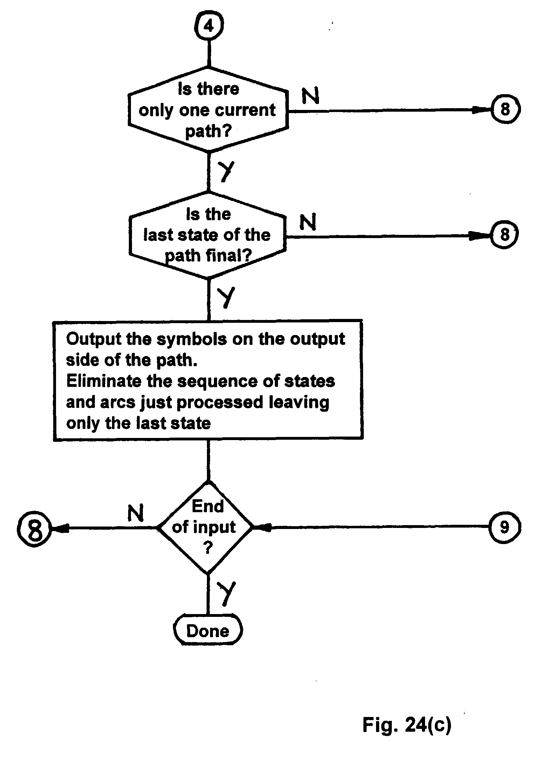

Figure 24 illustrates the procedural steps in applying the date-marking transducer built according to Fig. 23.

As already mentioned, the transducer constructed by the method above, can be used to mark up text. It inserts the marker "[DT " before and the marker "]" after each maximal string that matches a date expression of our calendar. For example, the transducer maps the string "On Friday, June 14, 1996 I talked with Bill." to "On [DT Friday, June 14, 1996] I talked with Bill."

The procedure of applying a marking transducer to a text is now described. It is assumed here that the input text is a stream characters that are read one by one. The output of the process is a stream of characters identical to the input except that the markers "[DT " and "]" have been inserted in appropriate places.

This procedure is based on two important properties of marking transducers that follow directly from the way they are defined above:
(1) A marking transducer does not block on any input. That is, the language on the upper side of the relation defined by UPPER @-> PREFIX ... SUFFIX is the universal sigma-star language.
(2) Assuming that PREFIX and SUFFIX each consist of a single symbol, a marking transducer unambiguously maps each input string to a unique output string.

The key notion in the application process is that of a path. A path is an alternating sequence of states and arcs in the transducer. For example, if the sequence
Si Aj Sk
is path or a part of a path, then Si and Sk are states and Aj is an arc (= transition) from Si to Sk.

Each path begins in some state Si and ends in some state Sn, possibly the same as Si. Each arc Aj is labeled by a pair of symbols x:y, or a single symbol z representing the identity pair z:z, such that the input side symbol (x or z) is either the epsilon symbol (0) or a letter that matches the next character of the input.

Paths are created by matching the input string against the input side symbols. In general, a character in the input string matches against arc labels that are labelled by the same character or by a pair that contains the same character on the input side. However, paths may also contain arcs labeled by a pair that has the epsilon symbol (0) on the input side, such as 0:[DT. Such arcs can be included in a path freely without "consuming" any character from the input string.

Because of arcs with epsilons on the input side, an input string may be matched to produce the alternate paths in a transducer. or example, the string "July" may give rise to the two paths shown below. 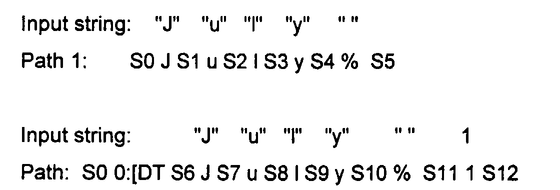 In Path 1 the arcs on the path each successively match one character of the input string. In Path 2, the first arc has an epsilon on the input side; thus it does not consume any character from the input string.

A path that matches the initial part of an input string may lead to a state that does not allow the path to be lengthened to match the next character of the input. In the case of this date parsing transducer, for example, the last state on Path 1 cannot contain a transition for any numeral other than zero. The reason is that "July 1", "July 2", etc. are all valid dates by our definition. For the same reason, the last state of Path 2 must contain transitions for all numerals from one to nine.

From these considerations, it follows that the date marking transducer contains only one path matching the string up to the last character of "July 1": 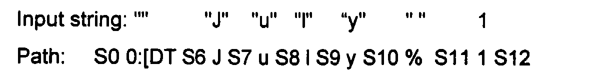 However, the last state of the above path, S12, is not a final state in the transducer because the transducer must map each valid date expression to a string that contains both the initial "[DT " and the closing "]" marker. Consequently, S12 must contain an arc labelled 0:] that leads to a final state, S13, to give us the path.

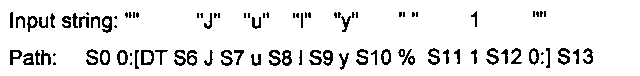

The process of applying a transducer to a string should not produce any output as long as there is more than a single path to consider. In the case at hand, for example, it must wait until the last character of "July 1" because only at that point it becomes certain whether "[DT " should be inserted in the beginning. Furthermore, it should only produce the output when it has reached a final state along that single path.

The same consideration holds for longer expressions. For example, in the case of "July 1 is today", the application process will quietly process the input string up to the " " following "July 1" because only at that point it is certain that (1) this substring is a valid date expression and (2) not part of another, longer date expression such as "July 15". At that point, the application process will output "[DT July 1] ", the symbols on the lower side of the single path that matches the input that has been processed so far. It will then continue processing the rest of the input, "is today" from the last state of that path.

The process keeps list of Current Paths that each consist of
(1) the current position in the input string,
(2) the last state of the path,
(3) the sequence of states and arcs.
As the list of Current Paths is processed, a list of New Paths is created that becomes the list of Current Paths at the next stage of the process.

## Claims

1. A method carried out in a data processing system, comprising the steps of.
(a) reading an input string in a first language,
(b) determining the position in the input string of at least one predetermined substring,
(c) modifying said substring, and
(d) outputting said string including said modified substring.

2. The method of any of claim 1, wherein step (b) includes selecting said predetermined substring from left to right or from right to left.

3. The method of claim 1, 2 or 3, wherein step (b) includes determining the longest match or the shortest match in said input string of said predetermined substring.

4. The method of any of the preceding claims, wherein step (c) comprises inserting one or more predetermined marking elements in the substring.

5. The method of claim 4, wherein step (c) includes the step of (c1) inserting a first predetermined marking element at the end of the substring.

6. The method of claim 5, wherein said substring comprises a multiword token and said first marking element comprises an end-of-token symbol (END%_OF%_TOKEN).

7. The method of claim 4 or 5 step (c) includes the step of (c2) inserting a second predetermined marking element at the start of the substring.

8. The method of claim 7, wherein said substring is one of a plurality of predetermined regular expressions (for example, a proper name, a date, an address, a formatted number, or other regular language), said second marking element comprises a predetermined prefix symbol and said first marking element comprises a predetermined suffix symbol.

9. The method of claim 1, 2 or 3, wherein step (c) comprises replacing said substring with one of a plurality of predetermined replacement elements (for example, a string from a second language, for example one or more symbols, or the empty string).

10. A programmable text processing apparatus when suitably programmed for carrying out the method of claim 1, the apparatus including a processor, memory, and input/output circuitry.
